# EUROPEAN PATENT SPECIFICATION

(11) **EP 4 270 343 B1**
(45) Date of publication and mention of the grant of the patent: **16.09.2026**
(21) Application number: 22918604.4
(22) Date of filing: 05.01.2022
(51) Int. Cl.: G08B 17/107, G08B 17/113

(54) **FIRE DETECTION DEVICE**
BRANDERKENNUNGSVORRICHTUNG
DISPOSITIF DE DÉTECTION D'INCENDIE

(43) Date of publication of application: 01.11.2023
(73) Proprietor: Hochiki Corporation, Shinagawa-ku, Tokyo 141-8660 (JP)
(72) Inventor: WASHIZU, Keisuke, Tokyo 141-8660 (JP); MASUZAWA, Hiroki, Tokyo 141-8660 (JP)
(74) Representative: Laine IP Oy
(86) International application number: PCT/JP2022/000117
(87) International publication number: WO 2023/132013

(56) References cited:
- EP-A1- 2 172 916
- EP-A1- 3 828 530
- JP-A- 2008 242 634
- JP-A- 2010 238 095
- JP-A- 2010 238 095
- JP-A- H07 121 785

## Description

### Technical Field

The present invention relates to a fire detection apparatus.

### Background Art

Conventionally, a scattered light-type sensor has been known (for example, Patent Document 1). This scattered light-type sensor detects a fire based on scattered light generated by irradiating light to smoke particles flowing into a detection space of the scattered light-type sensor.

### Citation List

### Patent Document

Patent Document 1: JP-A-2020-187462, JP 2010238095, EP 3 828 530, EP 2 172 916. JP-2010-238095 discloses a photoelectric smoke detector.

### Summary of the Invention

### Technical Problem

In the scattered light-type sensor, from a viewpoint of improving accuracy of fire detection, it is important to appropriately process light related to the detection space, and a technique for appropriately processing the light has been desired.

The invention has been made in view of the above, and an object of the invention is to provide a fire detection apparatus that can prevent ambient light from entering the detection space and appropriately process the disturbance light.

### Solution to Problem

In order to solve the above-described problems and archive the purposes, a fire detection apparatus of claim 1 is a fire detection apparatus for detecting a fire in a monitoring area, the fire detection apparatus comprises: a detection space into which a detection target caused by the fire flows; a light emitting portion configured to emit emission light for detecting the detection target into the detection space; a light receiving portion configured to receive scattered light generated by the emission light scattered by the detection target inside the detection space; an ambient light processing portion configured to prevent ambient light from entering the detection space; and a disturbance light processing portion configured to process disturbance light other than the scattered light, the disturbance light being generated inside the detection space due to the emission light, wherein: the ambient light processing portion and the disturbance light processing portion are elements different from each other; the ambient light processing portion is provided outside the detection space; and the disturbance light processing portion is provided inside the detection space.

The fire detection apparatus further comprises: a detection space cover configured to cover the detection space; and an outer cover configured to cover the detection space cover, wherein: the disturbance light processing portion is formed integrally with the detection space cover; and the ambient light processing portion is formed integrally with the outer cover.

The ambient light processing portion is a labyrinth portion configured to prevent ambient light from entering the detection space and introduce a fluid containing the detection target to the detection space.

The disturbance light processing portion prevents the emission light emitted toward a predetermined area in the detection space from being received by the light receiving portion.

The ambient light processing portion is provided on an opposite side from an attachment portion for installing the fire detection apparatus on an installation target with respect to the disturbance light processing portion. Advantageous Effects of the Invention

According to the fire detection apparatus of claim 1, since the disturbance light processing portion is formed integrally with the detection space cover, and the ambient light processing portion is formed integrally with the outer cover, for example, it is possible to reduce the number of parts of the fire detection apparatus, and reduce an assembly process of the fire detection apparatus to reduce the cost.

Since the ambient light processing portion is a labyrinth portion configured to prevent ambient light from entering the detection space and introduce a fluid containing the detection target to the detection space, for example, the ambient light processing portion may be provided with both a function of preventing ambient light from entering the detection space and a function of introducing the fluid including the detection target to the detection space, therefore, an individual element for realizing each function is unnecessary, and thus it is possible to reduce the number of parts of the fire detection apparatus to reduce the cost.

Since the disturbance light processing portion prevents the emission light emitted toward a predetermined area in the detection space from being received by the light receiving portion, for example, unintended light reception can be prevented, and thus it is possible to improve fire detection accuracy.

Since the ambient light processing portion is provided on an opposite side from an attachment portion for installing the fire detection apparatus on an installation target with respect to the disturbance light processing portion, for example, ambient light may be reliably blocked on the opposite side from the fire detection apparatus of the fire detection apparatus.

### Brief Description of the Drawings

Fig. 1 is a side view of a sensor according to an embodiment.
Fig. 2 is a perspective view of the sensor.
Fig. 3 is a front view of the sensor.
Fig. 4 is a cross-sectional view taken along line A-A of Fig. 3.
Fig. 5 is an exploded perspective view of the sensor.
Fig. 6 is an exploded perspective view of the sensor.
Fig. 7 is a perspective view of an outer cover.
Fig. 8 is a perspective view of the outer cover.
Fig. 9 is a side view of the outer cover.
Fig. 10 is a front view of the outer cover.
Fig. 11 is a rear view of the outer cover.
Fig. 12 is a perspective view of an inner cover.
Fig. 13 is a perspective view of the inner cover.
Fig. 14 is a side view of the inner cover.
Fig. 15 is a front view of the inner cover.
Fig. 16 is a rear view of the inner cover.
Fig. 17 is a perspective view of a smoke detector cover.
Fig. 18 is a perspective view of the smoke detector cover.
Fig. 19 is a perspective view of the smoke detector cover.
Fig. 20 is a side view of the smoke detector cover.
Fig. 21 is a front view of the smoke detector cover.
Fig. 22 is a rear view of the smoke detector cover.
Fig. 23 is a perspective view of a smoke detector base.
Fig. 24 is a perspective view of the smoke detector base.
Fig. 25 is a side view of the smoke detector base.
Fig. 26 is a front view of the smoke detector base.
Fig. 27 is a rear view of the smoke detector base.
Fig. 28 is a diagram illustrating an inside of a detection space.
Fig. 29 is a diagram illustrating the inside of the detection space.
Fig. 30 is a diagram illustrating the inside of the detection space.

### Mode for Carrying Out the Invention

An embodiment of a fire detection apparatus according to the invention will be described in detail below with reference to the accompanying drawings. However, the invention is not limited by this embodiment.

### [Basic concept of embodiment]

First, a basic concept of the fire detection apparatus according to this embodiment will be described. The fire detection apparatus is an apparatus for detecting a fire in a monitoring area. The "monitoring area" is an area to be monitored by the fire detection apparatus, specifically is a concept indicating an indoor or outdoor area, and is, for example, a concept indicating any space such as a room, a staircase, or a corridor.

Further, in the following embodiment, the case where the "monitoring area" is a room will be described as an example.

### [Specific content of each embodiment]

Next, specific content of the embodiment will be described.

### (Configuration)

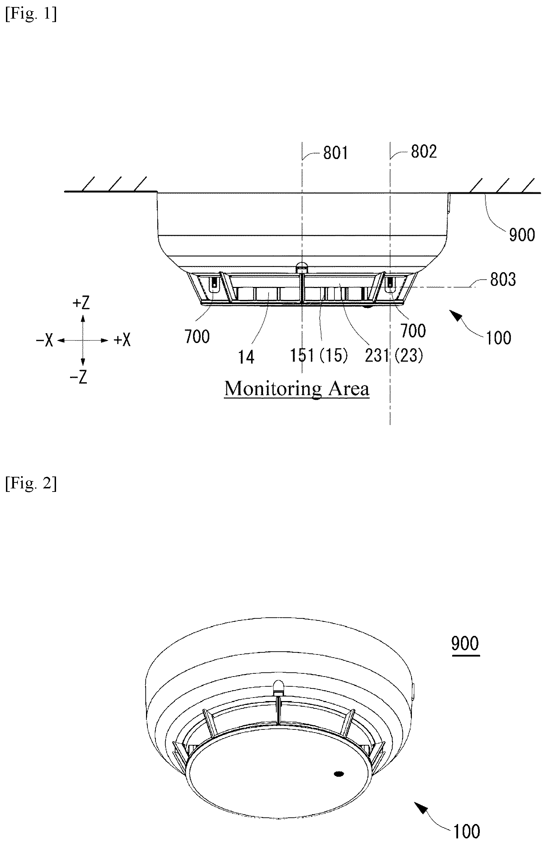

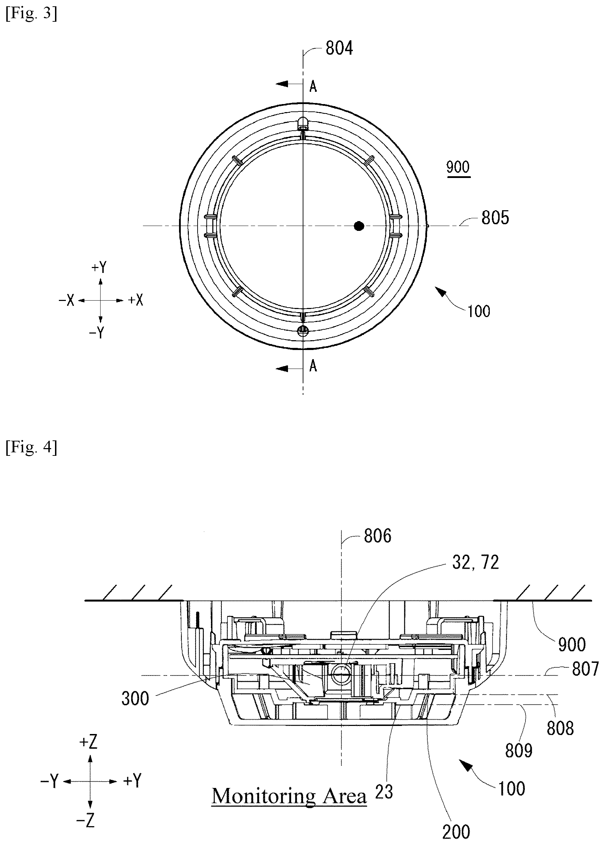

First, a configuration of a sensor of the present embodiment will be described. Fig. 1 is a side view of the sensor according to the present embodiment, Fig. 2 is a perspective view of the sensor, Fig. 3 is a front view of the sensor, Fig. 4 is a cross-sectional view taken along line A-A of Fig. 3, and Figs. 5 and 6 are exploded perspective views of the sensor. Note that in each figure, an element related to a feature of the application in a sensor 100 is illustrated and described by attaching a reference symbol thereto, and a similar configuration to that of a conventional sensor may be applied to an element other than the described element. In addition, in Fig. 4, hatching of a cross section is omitted for convenience of description.

Note that it is presumed that X-Y-Z axes of each figure are orthogonal to one another, a Z-axis indicates a vertical direction (that is, a longitudinal direction or a thickness direction in an installed state of the sensor 100), a -Z direction is referred to as a front side, and a +Z direction is referred to as a rear side. In addition, the X-axis and the Y-axis indicate a horizontal direction (that is, a transverse direction or a width direction in the installed state of the sensor 100). In addition, in an XY-plane of Fig. 3, a direction away from a center of the sensor 100 is referred to as an outer peripheral side, and a direction approaching the center is referred to as an inner side.

Note that a reference line 801 of Fig. 1 is a center line passing through the center of the sensor 100 and parallel to an upward/downward direction of the drawing, and is illustrated for convenience of description. Note that reference lines of other respective figures are illustrated for convenience of description. A reference line 802 of Fig. 1 is a center line passing through a center of a detection element 700 and parallel to the upward/downward direction of the drawing. A reference line 803 is a line indicating the same height position as that of a position on a frontmost side of a protrusion 23 (that is, the same height position as that of a frontmost side of a stepped portion 231).

A reference line 804 of Fig. 3 is a center line passing through the center of the sensor 100 and parallel to the upward/downward direction of the drawing, and a reference line 805 is a center line passing through the center of the sensor 100 and parallel to the left-right direction of the drawing.

A reference line 806 of Fig. 4 is a center line passing through a center of a light receiving portion 72 and parallel to the upward/downward direction of the drawing, and a reference line 807 is a center line passing through the center of the light receiving portion 72 and parallel to the left-right direction of the drawing. A reference line 808 of Fig. 4 is a line indicating the same height position as that of a base portion 200, and a reference line 809 is a line indicating the same height position as a frontmost position of the protrusion 23 (that is, the same height position as a frontmost position of the stepped portion 231).

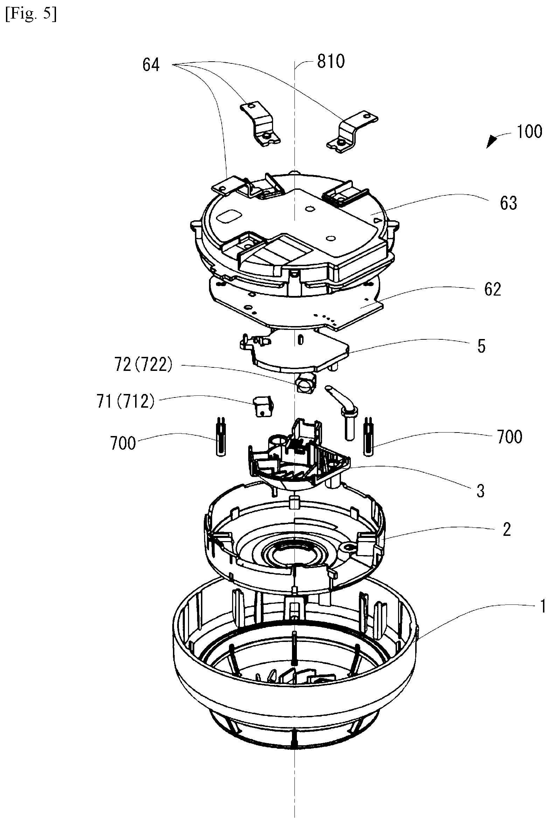

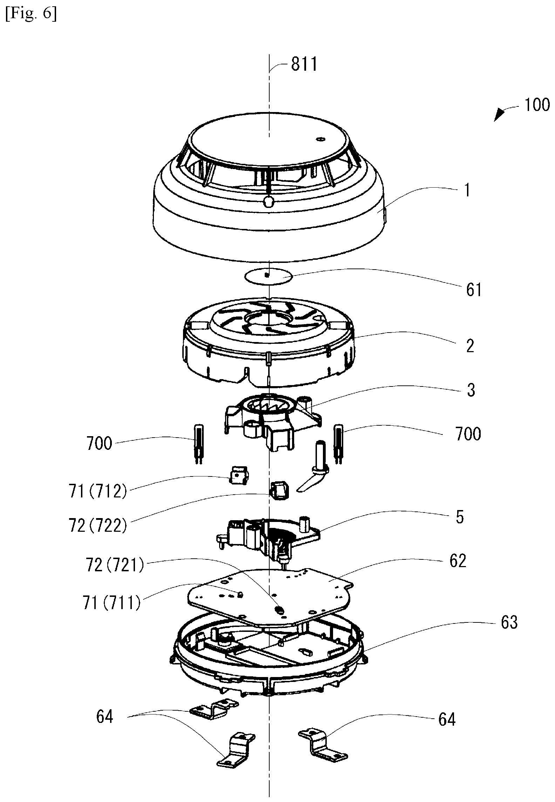

Reference lines 810 and 811 of Figs. 5 and 6 are center lines passing through the center of the sensor 100 and parallel to the upward/downward direction of the drawings.

The sensor 100 is a fire detection apparatus provided in the monitoring area, and is, for example, an apparatus for detecting a fire in the monitoring area. For example, the sensor 100 is installed on a ceiling 900, which is an installation target.

Note that the installation target of the sensor 100 is not limited to the ceiling 900. For example, a wall (not illustrated) of a room, etc. may be the installation target. However, in the present embodiment, the case where the installation target is the ceiling 900 (that is, the sensor 100 is installed on the ceiling 900) will be described as an example.

As illustrated in Figs. 5 and 6, the sensor 100 includes an outer cover 1, an inner cover 2, a smoke detector cover 3 (detection space cover), a smoke detector base 5, an insect screen 61 (Fig. 6), a board 62, a terminal board 63, an engaging metal fitting 64, the detection element 700, a light emitting portion 71, and the light receiving portion 72.

### (Configuration - outer cover)

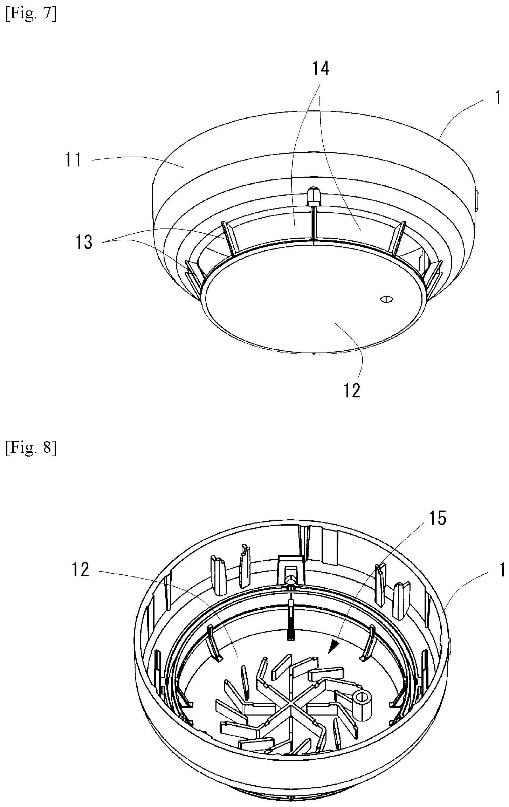

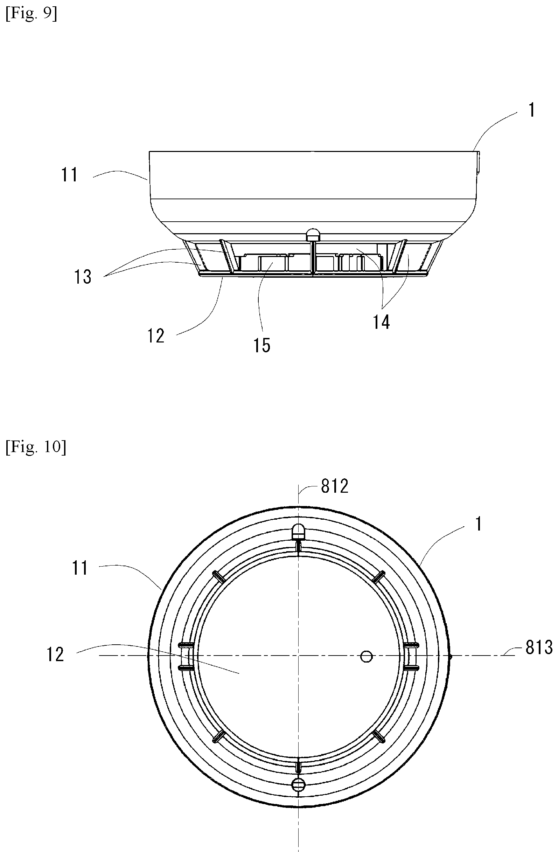

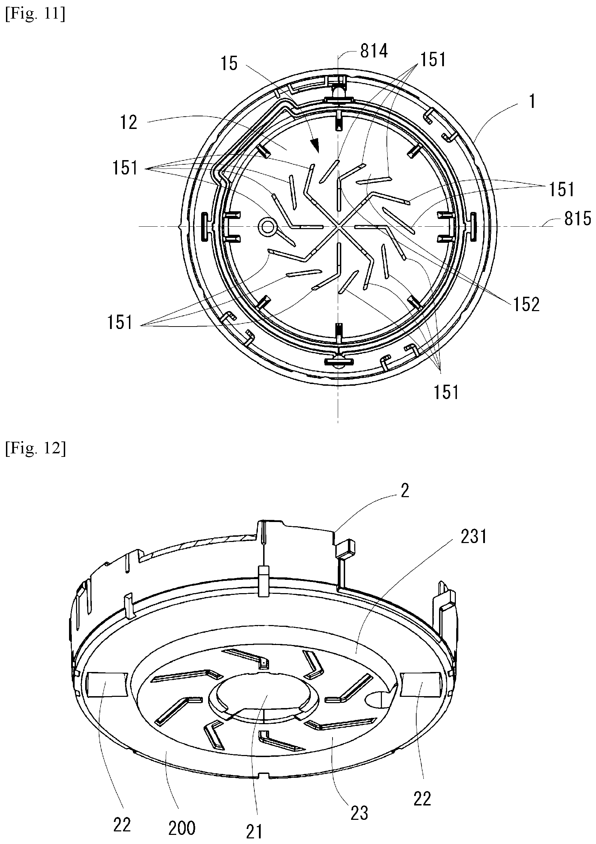

Figs. 7 and 8 are perspective views of the outer cover, Fig. 9 is a side view of the outer cover, Fig. 10 is a front view of the outer cover, and Fig. 11 is a rear view of the outer cover. Note that, in each figure, with regard to a plurality of similar components (for example, a connecting portion 13, an opening 14, etc. of Fig. 9), for convenience of description, only some of the components will be described by attaching reference symbols thereto (which is similarly applied to other elements of other figures).

Note that reference lines 812 and 814 of Figs. 10 and 11 are center lines passing through a center of the outer cover 1 and parallel to the upward/downward direction of the drawings, and reference lines 813 and 815 of Figs. 10 and 11 are center lines passing through the center of the outer cover 1 and parallel to the left-right direction of the drawings.

The outer cover 1 covers and houses elements of the sensor 100 (the inner cover 2, the smoke detector cover 3, etc.) from the front side, and forms a part of an outer shape of the sensor 100. For example, the outer cover 1 is made of resin. The outer cover 1 includes a main body 11, a top plate portion 12, the connecting portion 13, the opening 14, and a labyrinth portion 15 of Fig. 9.

### (Configuration - outer cover - main body)

The main body 11 is a substantially cylindrical portion having a predetermined diameter.

### (Configuration - outer cover - top plate portion)

The top plate portion 12 is a portion provided on the front side of the main body 11, and is a circular plate-shaped portion having a smaller diameter than that of an outer circumference of the main body.

### (Configuration - outer cover - connecting portion)

The connecting portion 13 is a portion that connects the main body 11 and the top plate portion 12 to each other, and is, for example, a portion extending between the main body 11 and the top plate portion 12 as illustrated in Fig. 9.

### (Configuration - outer cover - opening)

The opening 14 is an opening for allowing a heat air current to flow into the sensor 100 or allowing the heat air current to flow out from the inside of the sensor 100. The opening 14 is formed in a gap between the main body 11 and the top plate portion 12, and is divided into a plurality of parts by a plurality of connecting portions 13.

Note that the "heat air current" is a concept indicating a flow of a fluid including a detection target generated in association with a fire in the monitoring area, and is, for example, a concept indicating a flow of a relatively high-temperature fluid. The "detection target" is a target detected by the sensor 100, specifically is a target generated in association with a fire in the monitoring area, and is, for example, a concept including smoke particles generated in association with a fire.

### (Configuration - outer cover - labyrinth portion)

The labyrinth portion 15 is an ambient light processing portion that prevents ambient light from entering the detection space 300 (Fig. 4). Specifically, the labyrinth portion 15 prevents ambient light from entering the detection space 300 and introduces a fluid containing a detection target to the detection space 300. The labyrinth portion 15 is provided outside the detection space 300. The labyrinth portion 15 is provided on the opposite side from an attachment portion for installing the sensor 100 on the ceiling 900 which is an installation target with reference to a disturbance light processing portion. Note that the disturbance light processing portion and the attachment portion will be described later. As illustrated in Fig. 11, the labyrinth portion 15 includes a plurality of partition walls 151.

Note that the "detection space" 300 is a space for detecting smoke particles, which are detection targets resulting from a fire, and is a lightproof space.

The "ambient light" is light irradiated toward the sensor 100 from the outside of the sensor 100, and is, for example, a concept including natural light such as sunlight, artificial light such as lighting, etc.

The partition walls 151 are provided by being fixed to a surface of the top plate portion 12 on the rear side, protrude from the top plate portion 12 toward the rear side by a predetermined height, and are provided adjacent to each other with a gap 152 therebetween. The partition walls 151 may be formed integrally with the top plate portion 12 or may be formed separately from the top plate portion 12 and then fixed thereto using an adhesive, etc. In the present embodiment, it is assumed that the partition walls 151 are integrally formed. In the sensor 100 of Fig. 1 in the assembled state, the partition walls 151 are configured to be erected from an upper surface (surface on the front side) of the stepped portion 231 of the inner cover 2 (refer to Fig. 12 described later). As illustrated in Fig. 11, the partition walls 151 extend from the inside to the outside of the sensor 100.

By adopting such a configuration, the heat air current is introduced into the detection space 300 through the gaps 152 between the partition walls 151. Moreover, ambient light is blocked by the partition walls 151 and does not enter the detection space 300.

### (Configuration - inner cover)

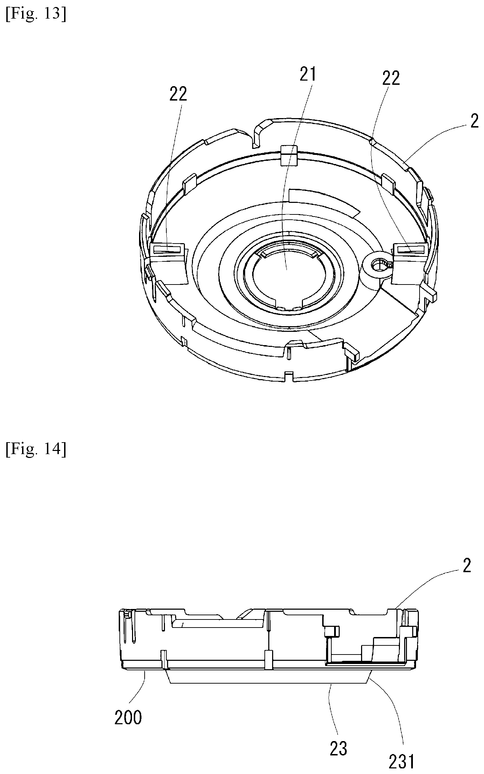

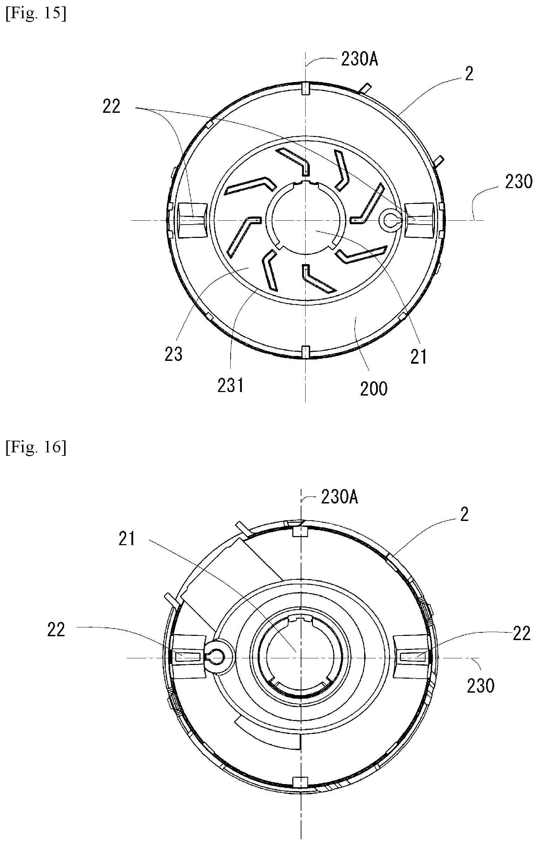

Figs. 12 and 13 are perspective views of the inner cover, Fig. 14 is a side view of the inner cover, Fig. 15 is a front view of the inner cover, and Fig. 16 is a rear view of the inner cover.

Note that a major axis 230 of Figs. 15 and 16 indicates a major axis of an ellipse, which is a peripheral shape of the protrusion 23 (Fig. 15), and indicates a center line passing through a center of the inner cover 2 and parallel to the left-right direction of the drawings. A minor axis 230A of Figs. 15 and 16 indicates a minor axis of the ellipse, which is the peripheral shape of the protrusion 23 (Fig. 15), and indicates a center line passing through the center of the inner cover 2 and parallel to the upward/downward direction of the drawings.

The inner cover 2 covers and houses an element (the smoke detector cover 3, etc.) of the sensor 100, and has a circular shape in a front view. For example, the inner cover 2 is made of resin. The inner cover 2 has a first opening 21, a second opening 22, and the protrusion 23 of Fig. 12.

### (Configuration - inner cover - first opening)

The first opening 21 is an opening for allowing the heat air current to flow into the detection space 300 and allowing the heat air current to flow out from the inside of the detection space 300. As illustrated in Fig. 15, the first opening 21 is a circular opening provided at the center of the inner cover 2 in a front view.

### (Configuration - inner cover - second opening)

The second opening 22 is an opening which the detection element 700 is inserted through and is disposed in. As illustrated in Fig. 15, the second opening 22 is a rectangular opening having an elliptical shape in a front view and provided on each of both sides of the protrusion 23 on the major axis 230 of the protrusion 23.

### (Configuration - inner cover - protrusion)

The protrusion 23 is a portion of the inner cover 2 protruding from the base portion 200 (Figs. 12, 14, and 15) toward the front side. As illustrated in Fig. 15, the protrusion 23 has an elliptical shape in a front view and includes the stepped portion 231.

The stepped portion 231 is a part of the protrusion 23 and is a portion that protrudes and rises with respect to the base portion 200.

### (Configuration - smoke detector cover)

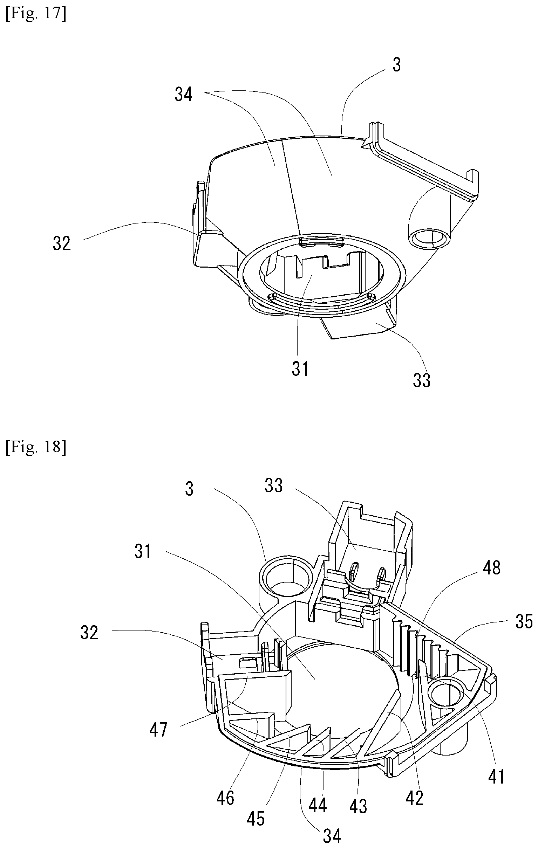

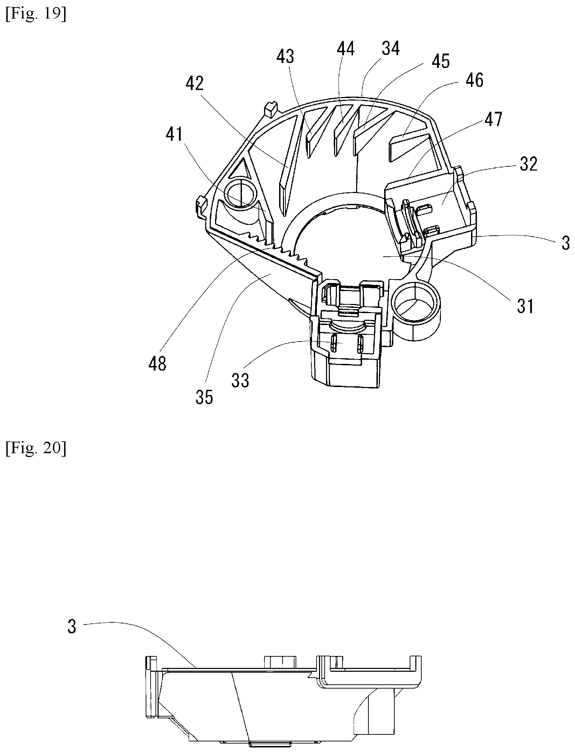

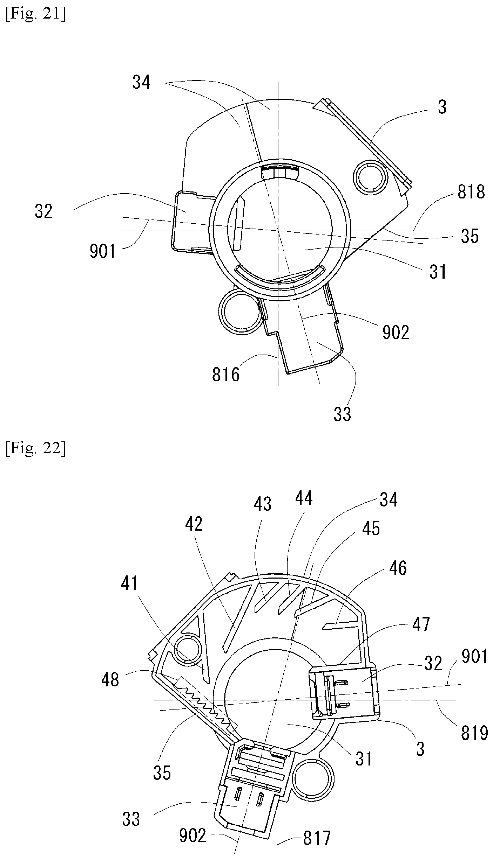

Figs. 17 to 19 are perspective views of the smoke detector cover, Fig. 20 is a side view of the smoke detector cover, Fig. 21 is a front view of the smoke detector cover, and Fig. 22 is a rear view of the smoke detector cover.

The smoke detector cover 3 covers the detection space 300 (Fig. 4), a light emitting-side optical element 712 (Figs. 5 and 6), and a light receiving-side optical element 722 together with the smoke detector base 5, that is, partitions the inside and outside of the detection space 300. For example, the smoke detector cover 3 is made of resin. Details of the smoke detector cover 3 will be described later.

### (Configuration - smoke detector base)

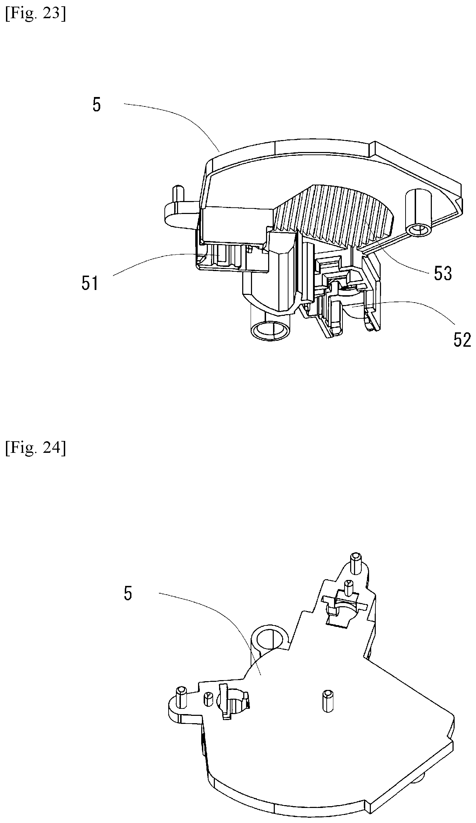

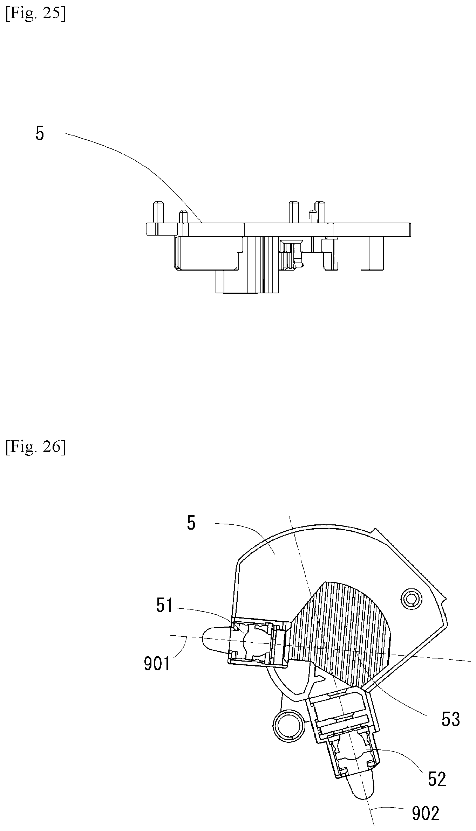

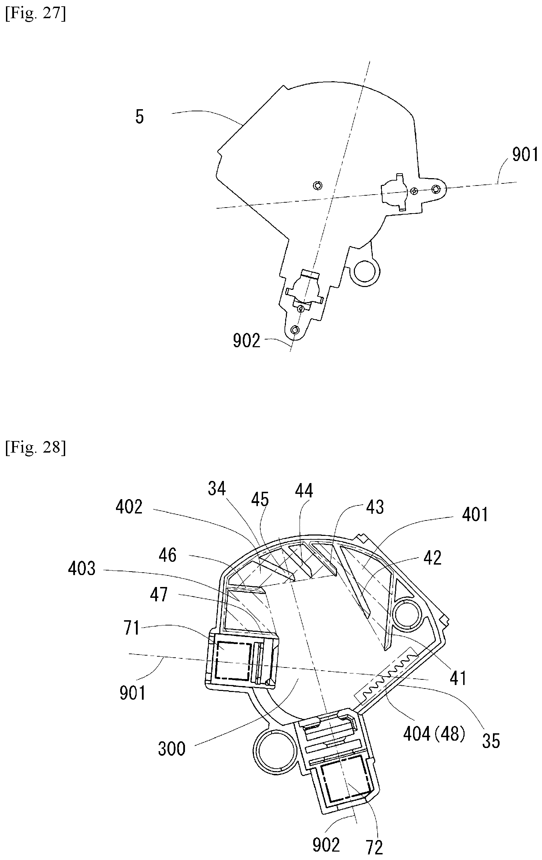

Figs. 23 and 24 are perspective views of the smoke detector base, Fig. 25 is a side view of the smoke detector base, Fig. 26 is a front view of the smoke detector base, and Fig. 27 is a rear view of the smoke detector base.

Note that a reference line 816 of Fig. 21 is a center line passing through a center of the smoke detector cover 3 and parallel to the upward/downward direction of the drawing, and a reference line 818 is a center line orthogonal thereto. An optical axis 901 indicates an optical axis of the light emitting portion 71 (Fig. 28) in the sensor 100 in an assembled state. An optical axis 902 indicates an optical axis of the light receiving portion 72 (Fig. 28) in the sensor 100 in the assembled state. A reference line 817 of Fig. 22 is a center line passing through the center of the smoke detector cover 3 and parallel to the upward/downward direction of the drawing, and a reference line 819 is a center line orthogonal thereto.

The smoke detector base 5 covers the detection space 300 (Fig. 4), the light emitting-side optical element 712 (Figs. 5 and 6), and the light receiving-side optical element 722 together with the smoke detector cover 3, that is, partitions the inside and outside of the detection space 300. For example, the smoke detector base 5 is made of resin. For example, the smoke detector base 5 has a flat plate shape as a whole, and includes a light emitting-side housing 51 (Figs. 23 and 26), a light receiving-side housing 52, and an attenuator 53.

### (Configuration - smoke detector base - each housing)

The light emitting-side housing 51 is a portion for housing the light emitting-side optical element 712 (Figs. 5 and 6).

The light receiving-side housing 52 is a portion for housing the light receiving-side optical element 722 (Figs. 5 and 6).

### (Configuration - smoke detector base - attenuator)

The attenuator 53 is a portion for a countermeasure against false alarms suppressing an increase in output due to dust or condensation, that is, prevents erroneous detection as smoke particles due to an increase in output due to dust or condensation, and is provided, for example, in a predetermined range on the front side surface forming an inner surface of the detection space 300 in the smoke detector base 5. For example, the attenuator 53 is formed by combining a plurality of ridges and grooves.

### (Configuration - insect screen)

The insect screen 61 of Fig. 6 is used to prevent insects from entering the detection space 300 while allowing the heat air current to flow into or out of the detection space 300 (Fig. 4). For example, the insect screen 61 is a circular one provided in the first opening 21 of the inner cover 2, and is provided with a plurality of small holes (not illustrated) having such a predetermined diameter that the small holes allow inflow or outflow of the heat air current and can prevent entry of insects.

### (Configuration - board)

The board 62 of Figs. 5 and 6 is a circuit board on which an electric circuit including various elements, an IC, electric wiring, etc. is mounted. As illustrated in Fig. 6, for example, a light emitting element 711 and a light receiving element 721 are mounted on a surface of the board 62 on the front side. Further, the detection element 700 is mounted on the board 62 in addition to each of these elements.

### (Configuration - terminal board)

The terminal board 63 of Figs. 5 and 6 covers elements (the smoke detector cover 3, etc.) of the sensor 100 from the rear side. The terminal board 63 is attached to the ceiling 900 via the engaging metal fitting 64, that is, is an attachment portion for attaching the sensor 100 to the ceiling 900.

### (Configuration - engaging metal fitting)

The engaging metal fitting 64 is detachably attached to the terminal board 63 and an attachment structure on the ceiling 900 side (for example, a structure fit to or engaged with the engaging metal fitting 64 to fix and attach the engaging metal fitting 64). By using the engaging metal fitting 64, the sensor 100 including the terminal board 63 can be attached to the ceiling 900. Note that the engaging metal fitting 64 may be construed as corresponding to the "attachment portion".

In addition, although not illustrated in the present embodiment, it is presumed that the sensor 100 is attached to the ceiling 900 using an attachment base that is a circular plate-shaped member having approximately the same diameter as that of the terminal board 63. When this attachment base is used, the attachment base may be construed as corresponding to the "attachment portion". Note that the "attachment base" is a member provided between the sensor 100 and the ceiling 900 and used to install and attach the sensor 100 to the ceiling 900. Since a known configuration can be applied, a detailed description is omitted.

### (Configuration - detection element)

The detection element 700 of Figs. 5 and 6 is a heat detection element that detects heat of the heat air current generated in association with the fire in the monitoring area. For example, the detection element 700 may be configured using, for example, a thermistor, etc. that detects a temperature corresponding to heat and outputs temperature information indicating the detected temperature. The detection element 700 is mounted on the board 62, and a part of the detection element 700 protrudes to the front side of the inner cover 2 while being inserted into the second opening 22 of the inner cover 2 of Fig 12. Note that the detection element 700 does not have to be mounted, and is used as a composite smoke/heat sensor in the case of being mounted, and as a smoke sensor alone in the case of not being mounted.

### (Configuration - light emitting portion)

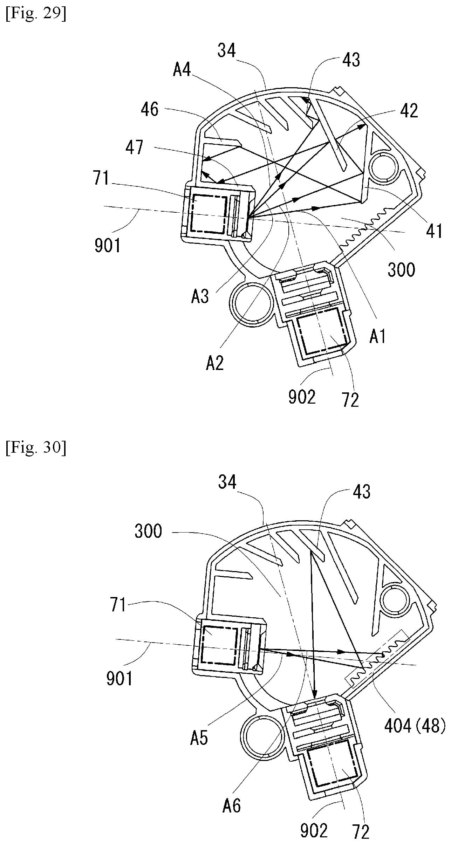

Figs. 28 to 30 are diagrams illustrating the inside of the detection space. Note that Figs. 28 to 30 illustrate a state in which the inside of the smoke detector cover 3 is viewed from the front side in the sensor 100 in the assembled state, and illustration of the attenuator 53 (Fig. 26), etc. of the smoke detector base 5 is omitted for convenience of description. In addition, in Figs. 29 and 30, paths of emission light emitted from the light emitting portion 71 are indicated by arrows A1 to A6. In particular, the arrows A1 to A6 indicate paths of light emitted by the light emitting portion 71 in a direction parallel to the smoke detector base 5 (that is, a direction parallel to the XY-plane of Fig. 3).

The light emitting portion 71 of Fig. 28 is a light emitting section that emits emission light for detecting smoke particles, which are detection targets, into the detection space 300. As illustrated in Figs. 5 and 6, for example, the light emitting portion 71 includes the light emitting element 711 and the light emitting-side optical element 712.

### (Configuration - light emitting portion - light emitting element)

The light emitting element 711 is an element that emits light (emission light), and may be configured using, for example, a light emitting diode (LED). The light emitting element 711 is mounted on the board 62.

### (Configuration - light emitting portion - light emitting-side optical element)

The light emitting-side optical element 712 is an element that guides and emits emission light emitted by the light emitting element 711 into the detection space 300, and may be configured using, for example, a prism. For example, the light emitting-side optical element 712 is housed in the smoke detector cover 3 and the smoke detector base 5.

For example, the light emitting-side optical element 712 is configured to emit light from the light emitting element 711 mainly in a direction parallel to the smoke detector base 5 (that is, the direction parallel to the XY-plane of Fig. 3). In addition, for example, the light emitting-side optical element 712 is configured to emit emission light toward a first reflecting portion 401 and a fourth reflecting portion 404 of Fig. 28. Note that the first reflecting portion 401 and the fourth reflecting portion 404 will be described later.

### (Configuration - light receiving portion)

The light receiving portion 72 of Fig. 28 is a light receiving section that receives scattered light, etc. generated by emission light scattered by the smoke particles, which are detection targets in the detection space 300. As illustrated in Figs. 5 and 6, for example, the light receiving portion 72 includes the light receiving element 721 and the light receiving-side optical element 722.

### (Configuration - light receiving portion - light receiving element)

The light receiving element 721 is an element that receives light (scattered light, etc.), and may be configured using, for example, a photodiode. The light receiving element 721 is mounted on the board 62.

### (Configuration - light receiving portion - light receiving-side optical element)

The light receiving-side optical element 722 is an element that guides light in the detection space 300 to the light receiving element 721, and may be configured using, for example, a prism. The light receiving-side optical element 722 is housed in the smoke detector cover 3 and the smoke detector base 5.

The light receiving-side optical element 722 is configured to guide scattered light scattered by the smoke particles and entering the light receiving-side optical element 722 and light reflected by a second reflecting portion 402 and entering the light receiving-side optical element 722 to the light receiving element 721. The light receiving-side optical element 722 is directed toward the second reflecting portion 402 to receive light reflected by the second reflecting portion 402.

### (Configuration - others - gas sensor)

In addition to the above configuration, a gas sensor (for example, a CO gas sensor) for detecting fire gas may be mounted.

### (Configuration - details of smoke detector cover)

Next, details of the smoke detector cover 3 will be described. As illustrated in Figs. 17 to 19, for example, the smoke detector cover 3 includes an opening 31, a light emitting-side housing 32, a light receiving-side housing 33, an inclined side wall 34, a right angle-side wall 35, a first wall 41, a second wall 42, a third wall 43, a fourth wall 44, a fifth wall 45, a sixth wall 46, a seventh wall 47, and an adjusting portion 48. Further, as illustrated in Fig 28, for example, the smoke detector cover 3 includes the first reflecting portion 401, the second reflecting portion 402, a third reflecting portion 403, and the fourth reflecting portion 404.

### (Configuration - details of smoke detector cover - opening)

The opening 31 is an opening for allowing the heat air current to flow into the detection space 300 and for allowing the heat air current to flow out from the inside of the detection space 300. As illustrated in Fig. 21, for example, the opening 31 is a circular opening and has substantially the same diameter as that of the first opening 21 of the inner cover 2.

### (Configuration - details of smoke detector cover - each housing)

The light emitting-side housing 32 is a portion for housing the light emitting-side optical element 712 (Figs. 5 and 6), and is a portion provided at a position corresponding to the light emitting-side housing 51 of the smoke detector base 5 in the sensor 100 in the assembled state.

The light receiving-side housing 33 is a portion that houses the light receiving-side optical element 722 (Figs. 5 and 6), and is a portion provided at a position corresponding to the light receiving-side housing 52 of the smoke detector base 5 in the sensor 100 in the assembled state.

### (Configuration - details of smoke detector cover - inclined side wall)

The inclined side wall 34 is a portion forming a part of the smoke detector cover 3 on a side surface side, and, as illustrated in Figs. 17 and 21, for example, is a portion provided at a position facing the light receiving-side housing 33 through the opening 31 in the front view. For example, in the front view, the inclined side wall 34 is inclined toward the front side (lower side of the drawing of Fig. 20) as the inclined side wall 34 is directed from the outer peripheral side of the smoke detector cover 3 to the inside.

### (Configuration - details of smoke detector cover - right angle-side wall)

The right angle-side wall 35 is a portion forming a part of the smoke detector cover 3 on the side surface side, and, as illustrated in Figs. 18 and 22, for example, is a portion perpendicular to a flat-plate shaped portion of the smoke detector base 5 in the sensor 100 in the assembled state. The right angle-side wall 35 is a portion provided adjacent to the light receiving-side housing 33.

### (Configuration - details of smoke detector cover - each wall)

The first wall 41 to the seventh wall 47 are portions provided to be erected on an inner-side surface of the inclined side wall 34, and are portions provided with a gap interposed therebetween. For example, the first wall 41 to the seventh wall 47 are portions provided inside the detection space 300 in the sensor 100 in the assembled state. The first wall 41 to the seventh wall 47 may be formed integrally with the smoke detector cover 3, or may be formed separately from the smoke detector cover 3, and then fixed thereto using an adhesive, etc. In the present embodiment, it is assumed that the first wall 41 to the seventh wall 47 are integrally formed with the smoke detector cover 3 (which is similarly applied to the adjusting portion 48).

### (Configuration - details of smoke detector cover - adjusting portion)

The adjusting portion 48 is a portion that functions as the fourth reflecting portion 404 to be described later, and is, for example, a portion provided on an inner-side surface of the right angle-side wall 35. As illustrated in Figs. 18 and 28, for example, the adjusting portion 48 is formed by combining a plurality of ridges and grooves. For example, an inclination and a height (or depth) of the ridges and grooves of the adjusting portion 48 are configured so that a part of emission light irradiated to the adjusting portion 48 (for example, emission light irradiated to the grooves) is captured and is not reflected to the light receiving portion 72 and the second reflecting portion 402, and another part of the irradiated emission light (for example, emission light irradiated to tops of the ridges) is reflected while being diffused toward the second reflecting portion 402. Note that a description will be given below on the assumption that, when light is diffused, the light is attenuated.

### (Configuration - details of smoke detector cover - first reflecting portion)

The first reflecting portion 401 is a portion provided inside the detection space 300 and is a portion that does not reflect emission light toward the second reflecting portion 402 and the light receiving portion 72 when the emission light is irradiated. The first reflecting portion 401 is a portion indicated by hatching in Fig. 28, that is, a portion surrounded by the first wall 41 and the third wall 43, and is a portion where the first wall 41 to the third wall 43 are provided. For example, when emission light is irradiated, the first reflecting portion 401 captures a part of the emission light and reflects another part of the emission light while diffusing the other part toward the third reflecting portion 403.

Note that the phrase "not reflect emission light toward the light receiving portion 72" is a concept indicating, for example, not reflecting emission light at the amount of light affecting an operation of the sensor 100 toward the light receiving portion 72. In addition, for example, the phrase "the first reflecting portion 401 reflects emission light" is a concept indicating that a member of the sensor 100 provided on the first reflecting portion 401 (for example, the first wall 41 to the third wall 43) reflects emission light. Similar expressions related to other reflecting portions are assumed to be similar concepts.

In addition, an area corresponding to the first reflecting portion 401 indicated by hatching in Fig. 28 may be construed as corresponding to a "predetermined area".

### (Configuration - details of smoke detector cover - second reflecting portion)

The second reflecting portion 402 is a portion provided in the detection space 300, is a portion that reflects emission light toward the light receiving portion 72 when the emission light is irradiated, and is a portion provided at a position different from that of the first reflecting portion 401. The second reflecting portion 402 is a portion indicated by hatching in Fig. 28, that is, a portion surrounded by the third wall 43 and the sixth wall 46, and is a portion where the third wall 43 to the sixth wall 46 are provided. For example, the second reflecting portion 402 is a portion provided at a position facing the light receiving portion 72.

### (Configuration - details of smoke detector cover - third reflecting portion)

The third reflecting portion 403 is a portion provided in the detection space 300, is a portion that does not reflect emission light toward the second reflecting portion 402 and the light receiving portion 72 when the emission light is irradiated, and is a portion provided at a position different from that of the first reflecting portion 401. The third reflecting portion 403 is a portion indicated by hatching in Fig. 28, that is, a portion surrounded by the sixth wall 46 and the seventh wall 47.

For example, the third reflecting portion 403 is a portion provided on the opposite side from the first reflecting portion 401 with respect to the second reflecting portion 402 in the front view. That is, the third reflecting portion 403 and the first reflecting portion 401 are portions provided on both sides of the second reflecting portion 402, respectively, in the front view.

For example, when emission light is irradiated, the third reflecting portion 403 captures a part of the emission light and reflects another part of the emission light while diffusing the other part toward the first reflecting portion 401.

### (Configuration - details of smoke detector cover - fourth reflecting portion)

The fourth reflecting portion 404 is a portion provided inside the detection space 300, and is a portion that captures a part of irradiated emission light and does not reflect the part to the light receiving portion 72 and the second reflecting portion 402 and reflects another part of the irradiated emission light while diffusing the other part toward the second reflecting portion 402 when the emission light is irradiated. As illustrated in Fig. 28, the fourth reflecting portion 404 is a portion formed by the adjusting portion 48.

Note that the four reflecting portions of the first reflecting portion 401 to the fourth reflecting portion 404 or respective members of the sensor 100 included in these reflecting portions may be construed as corresponding to the "disturbance light processing portion". Alternatively, only the first reflecting portion 401 and the third reflecting portion 403 or respective members of the sensor 100 included in these reflecting portions may be construed as corresponding to the "disturbance light processing portion".

The "disturbance light processing portion" is a portion for processing disturbance light, which is generated inside the detection space 300 due to emission light, other than scattered light, and is, for example, provided inside the detection space 300.

The "disturbance light" is a concept indicating light other than scattered light scattered by smoke particles in light caused by emission light emitted from the light emitting portion 71, and is, for example, a concept including emission light itself or reflected emission light, etc.

The phrase "process the disturbance light" is a concept indicating adjusting a direction, the amount of light, etc. of disturbance light, and is, for example, a concept including reflecting and diffusing disturbance light or capturing and attenuating disturbance light, etc.

### (Assembly procedure for sensor)

Next, a procedure for assembling the sensor 100 will be described. Here, an example of the procedure for assembling the sensor 100 will be described mainly with reference to Figs. 5 and 6.

First, the light emitting-side optical element 712 and the light receiving-side optical element 722 are housed in the light emitting-side housing 51 (Figs. 23 and 26) and the light receiving-side housing 52 of the smoke detector base 5.

Next, the smoke detector cover 3 is attached to the smoke detector base 5 using any method (for example, a method using an engagement structure provided in each element, etc.). In this case, the light emitting-side optical element 712 and the light receiving-side optical element 722 are also housed in the light emitting-side housing 32 (Fig. 19) and the light receiving-side housing 33 of the smoke detector cover 3.

Next, the board 62 (Fig. 4) on which the light emitting element 711, the light receiving element 721, and the detection element 700 are mounted is attached to the terminal board 63 from the front side of the terminal board 63 (the upper side of the drawing of Fig. 6) using any method (for example, a screwing method, etc.). In addition, the engaging metal fitting 64 is attached to the terminal board 63 from the rear side of the terminal board 63 (the lower side of the drawing of Fig. 6) using any method (for example, a screwing method, etc.).

Next, the smoke detector base 5 with the smoke detector cover 3 attached thereto is attached to the board 62 from the front side of the board 62 (the upper side of the drawing of Fig. 6) using any method (for example, a method of using an engagement structure provided in each element, a screwing method, etc.).

Next, the inner cover 2 is attached to the terminal board 63 from the front side of the terminal board 63 (the upper side of the drawing of Fig. 6) to which the smoke detector cover 3, etc. is attached using any method (for example, a method of using an engagement structure provided in each element, etc.). Note that, in this case, a part of the detection element 700 is inserted through the second opening 22 (Fig. 12) of the inner cover 2 and protrudes from the inner cover 2 toward the front side as illustrated in Fig. 1.

Next, the insect screen 61 is provided in the first opening 21 of the inner cover 2.

Next, the outer cover 1 is attached to the terminal board 63 from the front side (the upper side of the drawing of Fig. 6) of the terminal board 63 to which the inner cover 2, etc. is attached using any method (for example, a method using an engagement structure provided in each element, etc.). Note that, in this case, as illustrated in Fig. 1, the labyrinth portion 15 of the outer cover 1 comes into contact with the protrusion 23 of the inner cover 2. In addition, the insect screen 61 is pressed by some of the partition walls 151 of the labyrinth portion 15 (in Fig. 11, a crisscross intersection at the center of the outer cover 1), and the insect screen 61 is fixed to the sensor 100. In this way, assembly of the sensor 100 illustrated in Figs. 1 to 4 is completed.

### (Path of emission light (processing of disturbance light))

Next, a path of emission light emitted from the light emitting portion 71 will be described. That is, processing of disturbance light by each reflecting portion will be described. The emission light from the light emitting portion 71 is directly applied to, for example, the first reflecting portion 401 and the fourth reflecting portion 404 as indicated by the arrows A1 to A6 in Figs. 29 and 30, and is not directly irradiated to the second reflecting portion 402 and the light receiving portion 72. Note that the phrase "directly irradiated" is a concept indicating being directly irradiated without reflection or scattering.

### (Path of emission light - emission light directly irradiated to first reflecting portion)

Then, as illustrated in Fig. 29, as indicated by the arrows A2 and A4, a part of emission light directly irradiated to the first reflecting portion 401 is captured between the first wall 41 and the second wall 42 or between the second wall 42 and the third wall 43, and is not reflected by the other reflecting portions and the light receiving portion 72.

In addition, as indicated by the arrows A1 and A3, another part of emission light directly irradiated to the first reflecting portion 401 is reflected while being diffused toward the third reflecting portion 403 on the first wall 41 or the second wall 42. Thereafter, the reflected emission light is captured by the third reflecting portion 403 or reflected by the first reflecting portion 401, and is not reflected by the second reflecting portion 402, the fourth reflecting portion 404, and the light receiving portion 72.

### (Path of emission light - emission light directly irradiated to fourth reflecting portion)

In addition, as illustrated in Fig. 30, as indicated by the arrow A6, a part of emission light directly irradiated to the fourth reflecting portion 404 is captured by the grooves of the adjusting portion 48 forming the fourth reflecting portion 404 and is not reflected by the other reflecting portions and the light receiving portion 72.

In addition, as indicated by the arrow A5, another part of the emission light directly irradiated to the fourth reflecting portion 404 is reflected while being diffused toward the second reflecting portion 402 at tops of the ridges of the adjusting portion 48 forming the fourth reflecting portion 404. Thereafter, the reflected emission light is reflected while being diffused toward the light receiving portion 72 on the third wall 43 of the second reflecting portion 402.

That is, in this case, emission light, which is emitted from the light emitting portion 71 and then reflected and diffused several times so that the amount of light becomes relatively small, is received by the light receiving portion 72. Note that the amount of light here is sufficiently smaller than the amount of light scattered by the smoke particles and can be distinguished from the amount of scattered light. Therefore, emission light is emitted from the light emitting portion 71 at a predetermined cycle, and it is possible to verify whether or not the sensor 100 is normally operating based on whether or not emission light, the amount of which becomes relatively small at a timing corresponding to the emission timing, can be received by the light receiving portion 72.

### (Path of emission light - smoke detector base side)

In addition, it is assumed that a part of emission light is irradiated to the smoke detector base 5 inside the detection space 300. In this case, since the attenuator 53 (Fig. 23) is provided to the smoke detector base 5, the irradiated emission light can be attenuated by the attenuator 53, and the sensor 100 can be normally operated.

Note that, when the sensor 100 is installed on the ceiling 900 as illustrated in Fig. 1, for example, since the attenuator 53 of the smoke detector base 5 is oriented vertically downward as illustrated in Fig. 23, it is possible to prevent dust, etc. from accumulating in the grooves of the attenuator 53 and to prevent occurrence of diffused reflection due to the dust, etc.

### (Prevention of incidence of ambient light)

Next, prevention of incidence of ambient light will be described. In Fig. 1, since ambient light outside the sensor 100 is blocked by the plurality of partition walls 151 (Fig. 11) of the labyrinth portion 15, ambient light is prevented from entering the inside of the detection space 300 through the opening 31 of the smoke detector cover 3.

### (Supply of heat air current)

Next, a description will be given of supplying the sensor 100 with a heat air current containing smoke particles generated when a fire occurs in the monitoring area.

First, in Fig. 1, the heat air current generated in the monitoring area flows into the outer cover 1 through the opening 14 of the outer cover 1.

Next, a part of the introduced heat air current is supplied to the detection element 700 along the outer peripheral wall of the stepped portion 231. In addition, another part of the introduced heat air current is supplied to the inside from the outer peripheral side of the sensor 100 through the gap 152 (Fig. 11) between the plurality of partition walls 151 of the labyrinth portion 15, and flows into the detection space 300 through the first opening 21 of the inner cover 2 and the opening 31 of the smoke detector cover 3. In particular, since the first opening 21 of the inner cover 2 is provided with the insect screen 61 (Fig. 6), the heat air current flows into the detection space 300 through the plurality of small holes (not illustrated) of the insect screen 61.

Here, since the first opening 21 of the inner cover 2 and the opening 31 of the smoke detector cover 3 are circular, variation in inflow characteristics with respect to an inflow direction of the heat air current can be kept relatively small, and thus it is possible to reliably allow the heat air current to flow into the detection space 300 from all directions.

### (Fire detection operation)

Next, a fire detection operation by the sensor 100 will be described. For example, the sensor 100 performs an operation of detecting a fire based on the amount of light received by the light receiving portion 72 or the temperature of the heat air current detected by the detection element 700. Since a known operation may be applied as this operation, only an outline will be described.

### (Fire detection operation - when no fire is detected)

For example, when there is no fire in the monitoring area, no heat air current containing smoke particles flows into the detection space 300 of Fig. 28. Thus, the light receiving portion 72 receives a relatively small amount of light emitted from the light emitting portion 71, then reflected by the fourth reflecting portion 404 and the second reflecting portion 402, and irradiated thereto. In this case, the sensor 100 does not detect a fire.

In addition, since the heat air current containing smoke particles is not supplied to the detection element 700, the temperature detected by the detection element 700 is at a room temperature level. In this case, the sensor 100 does not detect a fire.

### (Fire detection operation - when fire is detected)

On the other hand, for example, when a fire occurs in the monitoring area, a heat air current containing smoke particles flows into the detection space 300 of Fig. 28. Therefore, the smoke particles are irradiated with light emitted from the light emitting portion 71 to generate a relatively large amount of scattered light, and the light receiving portion 72 receives the scattered light. In this case, the sensor 100 detects a fire.

In addition, for example, a heat air current containing smoke particles is supplied to the detection element 700, causing a temperature detected by the detection element 700 to rise to a predetermined level. In this case, the sensor 100 detects a fire.

Note that the fire detection operation described herein is an example and is not limited. More specifically, the following operation may be performed.

For example, a fire may be detected when the light receiving portion 72 receives a relatively large amount of light and the temperature detected by the detection element 700 rises to a predetermined level. Alternatively, a fire may be detected when the light receiving portion 72 receives a relatively large amount of light regardless of the temperature detected by the detection element 700.

### (Effect of embodiment)

As described above, according to the embodiment, by including the ambient light processing portion that prevents ambient light from entering the detection space 300, and the disturbance light processing portion that processes disturbance light, which is generated inside the detection space 300 due to emission light, other than scattered light, it is possible to prevent ambient light from entering the detection space 300, and to appropriately process disturbance light.

Further, since the disturbance light processing portion is integrally formed with the smoke detector cover 3, and the ambient light processing portion is integrally formed with the outer cover 1, for example, it is possible to reduce the number of parts of the sensor 100, and reduce an assembly process of the sensor 100 to reduce the cost.

In addition, when the ambient light processing portion is the labyrinth portion 15 that prevents ambient light from entering the detection space 300 and introduces the fluid including the detection target to the detection space 300, for example, the ambient light processing portion may be provided with both a function of preventing ambient light from entering the detection space 300 and a function of introducing the fluid including the detection target to the detection space 300. Therefore, an individual element for realizing each function is unnecessary, and thus it is possible to reduce the number of parts of the sensor 100 to reduce the cost.

In addition, for example, the disturbance light processing portion may prevent unintended light reception by preventing emission light emitted toward a predetermined area in the detection space 300 from being received by the light receiving portion 72, and thus it is possible to improve fire detection accuracy.

In addition, when the ambient light processing portion is provided on the opposite side from the terminal board 63 of the sensor 100 with reference to the disturbance light processing portion, for example, ambient light may be reliably blocked on the opposite side from the terminal board 63 of the sensor 100.

### [Modifications to embodiment]

Even though the embodiments according to the invention have been described above, the specific configuration and units of the invention may be modified and improved in any manner within the scope described in the claims. Such modifications will be described below.

### (With regard to problem to be solved and effect of invention)

First, the problem to be solved by the invention and the effect of the invention are not limited to the above-described content, and the invention may solve a problem not described above or achieve an effect not described above. In addition, the invention may solve a part of the problem described above or achieve a part of the effect described above.

### (With regard to labyrinth portion)

Even though the case where the labyrinth portion 15 of Fig. 8 is provided on the outer cover 1 has been described in the above embodiment, in a non claimed alternative example, the labyrinth portion 15 may be provided on the inner cover 2. Specifically, the labyrinth portion 15 may be formed integrally with the inner cover 2, or the separately formed labyrinth portion 15 may be fixed to the inner cover 2 using an adhesive, etc.

### (With regard to adjusting portion)

In the embodiment, a description has been given of the case where a structure including a combination of a plurality of ridges and grooves is used as the adjusting portion 48 of Fig. 18. However, the invention is not limited thereto. For example, the adjusting portion 48 may be configured as a flat plate-shaped portion not having the ridges and grooves. In this case, the flat plate-shaped portion may be configured as follows considering that emission light from the light emitting portion 71 is reflected at a reflection angle corresponding to an incident angle at the flat plate-shaped portion. For example, the light receiving portion 72 may be configured to receive a relatively small amount of light by adopting a configuration in which a part of spreading emission light is reflected toward the second reflecting portion 402 at the flat plate-shaped portion, and another part of the spreading emission light is reflected toward the first reflecting portion 401.

### (With regard to ambient light processing portion)

In the embodiment, a description has been given of the case where the labyrinth portion 15 is the ambient light processing portion. However, in a non claimed alternative example, a prevention member for preventing ambient light from entering the detection space 300 may be provided separately from the labyrinth portion 15, and the prevention member may be used as the ambient light processing portion.

### Reference Signs List

- 1: Outer cover
- 2: Inner cover
- 3: Smoke detector cover
- 5: Smoke detector base
- 11: Main body
- 12: Top plate portion
- 13: Connecting portion
- 14: Opening
- 15: Labyrinth portion
- 21: First opening
- 22: Second opening
- 23: Protrusion
- 31: Opening
- 32: Light emitting-side housing
- 33: Light receiving-side housing
- 34: Inclined side wall
- 35: Right angle-side wall
- 41: First wall
- 42: Second wall
- 43: Third wall
- 44: Fourth wall
- 45: Fifth wall
- 46: Sixth wall
- 47: Seventh wall
- 48: Adjusting portion
- 51: Light emitting-side housing
- 52: Light receiving-side housing
- 53: Attenuator
- 61: Insect screen
- 62: Board
- 63: Terminal board
- 64: Engaging metal fitting
- 71: Light emitting portion
- 72: Light receiving portion
- 100: Sensor
- 151: Partition wall
- 152: Gap
- 200: Base portion
- 230: Major axis
- 230A: Minor axis
- 231: Stepped portion
- 300: Detection space
- 401: First reflecting portion
- 402: Second reflecting portion
- 403: Third reflecting portion
- 404: Fourth reflecting portion
- 700: Detection element
- 711: Light emitting element
- 712: Light emitting-side optical element
- 721: Light receiving element
- 722: Light receiving-side optical element
- 801: Reference line
- 802: Reference line
- 803: Reference line
- 804: Reference line
- 805: Reference line
- 806: Reference line
- 807: Reference line
- 808: Reference line
- 809: Reference line
- 810: Reference line
- 811: Reference line
- 812: Reference line
- 813: Reference line
- 814: Reference line
- 815: Reference line
- 816: Reference line
- 817: Reference line
- 818: Reference line
- 819: Reference line
- 900: Ceiling
- 901: Optical axis
- 902: Optical axis
- A1: Arrow
- A2: Arrow
- A3: Arrow
- A4: Arrow
- A5: Arrow
- A6: Arrow

## Claims

1. A fire detection apparatus for detecting a fire in a monitoring area, the fire detection apparatus comprising:
a detection space (300) into which a detection target caused by the fire flows;
a detection space cover configured to cover the detection space (300);
a smoke detector base (5);
an outer cover (1) configured to cover the detection space cover;
an inner cover (2) configured to cover the detection space cover;
a light emitting portion (71) configured to emit emission light for detecting the detection target into the detection space (300);
a light receiving portion (72) configured to receive scattered light generated by the emission light scattered by the detection target inside the detection space (300);
a heat detection element (700);
an ambient light processing portion configured to prevent ambient light from entering the detection space (300);
a disturbance light processing portion configured to process disturbance light other than the scattered light, the disturbance light being generated inside the detection space (300) due to the emission light: and
an insect screen (61) configured to prevent insects from entering the detection space (300) while allowing heat air current to flow into or out of the detection space (300), wherein
the ambient light processing portion and the disturbance light processing portion are elements different from each other;
the ambient light processing portion is provided outside the detection space (300);
the disturbance light processing portion is provided inside the detection space (300);
the ambient light processing portion is a labyrinth portion (15) configured to prevent ambient light from entering the detection space (300) and introduce a fluid containing the detection target to the detection space (300), the labyrinth portion (15) including a plurality of partition walls (151),
the detection space cover covers the detection space (300), the light emitting side optical element (712), and the light receiving side optical element (712) together with the smoke detector base (5) and partitions the inside and outside of the detection space (300),
the detection space cover includes an opening (31) for allowing the heat air current to flow into the detection space (300) and for allowing the heat air current to flow out from the inside of the detection space (300), the opening (31) being a circular opening and having substantially the same diameter as that of the first opening (21) of the inner cover (2),
the disturbance light processing portion is integrally formed with the detection space cover (3),
the outer cover (1) covers the inner cover (2) and the detection space cover (3) from the front side, forms a part of an outer shape of the fire detection apparatus, and has a main body (11), a top plate portion (12), a connecting portion (13), an opening (14), and a labyrinth portion (15) formed integrally with the outer cover (1),
the inner cover covers and houses the detection space cover (3), has a circular shape in a front view, and has a first opening (21), a second opening (22), and a protrusion (23),
the first opening (21) of the inner cover (2) is an opening for allowing the heat air current to flow into the detection space (300) and allowing the heat air current to flow out from the inside of the detection space (300), the insect screen (61) being provided to the opening, the first opening (21) being a circular opening provided at the center of the inner cover (2) in a front view,
the second opening (22) of the inner cover (2) is an opening which the heat detection element (700) is inserted through and is disposed in, the second opening (22) being a rectangular opening having an elliptical shape in a front view and provided on each of both sides of the protrusion (23) on the major axis of the protrusion (23),
the protrusion (23) of the inner cover (2) is a portion of the inner cover (2) protruding from the base portion (200) toward the front side, the protrusion (23) coming into contact with the labyrinth portion (15) of the outer cover (1),
the insect screen (61) is a circular one provided in the first opening (21) of the inner cover (2), the insect screen (61) being fixed to the fire detection apparatus by pressing the insect screen (61) provided to the opening of the inner cover (2) by some of the partition walls (151) of the labyrinth portion (15), some of the partition walls (151) being a crisscross intersection at the center of the outer cover. (1)

## Patentansprüche

1. Branderfassungseinrichtung zum Erfassen eines Brandes in einem Überwachungsbereich, wobei die Branderfassungseinrichtung Folgendes umfasst:
einen Erfassungsraum (300), in den ein durch das Feuer verursachtes Erfassungsziel einströmt;
eine Erfassungsraumabdeckung, die so konfiguriert ist, dass sie den Erfassungsraum (300) abdeckt;
einen Raucherfassungssockel (5);
eine äußere Abdeckung (1), die so konfiguriert ist, dass sie die Erfassungsraumabdeckung abdeckt;
eine innere Abdeckung (2), die so konfiguriert ist, dass sie die Erfassungsraumabdeckung abdeckt;
einen lichtemittierenden Abschnitt (71), der so konfiguriert ist, dass er Emissionslicht zum Erfassen des Erfassungsziels in den Erfassungsraum (300) emittiert;
einen lichtempfangenden Abschnitt (72), der so konfiguriert ist, dass er Streulicht empfängt, das durch das vom Erfassungsziel innerhalb des Erfassungsraums (300) gestreute Emissionslicht erzeugt wird;
ein Wärmeerfassungselement (700);
einen Umgebungslichtverarbeitungsabschnitt, der so konfiguriert ist, dass er verhindert, dass Umgebungslicht in den Erfassungsbereich (300) eindringt;
einen Störlichtverarbeitungsabschnitt, der so konfiguriert ist, dass er Störlicht, das nicht Streulicht ist, verarbeitet, wobei das Störlicht aufgrund des Emissionslichts innerhalb des Erfassungsraums (300) erzeugt wird: und
ein Insektenschutzgitter (61), das so konfiguriert ist, dass es verhindert, dass Insekten in den Erfassungsraum (300) eindringen, gleichzeitig aber Wärmeluftstrom in den Erfassungsraum (300) hinein oder aus ihm herausströmen lässt, wobei
der Umgebungslichtverarbeitungsabschnitt und der Störungslichtverarbeitungsabschnitt voneinander verschiedene Elemente sind;
der Umgebungslichtverarbeitungsabschnitt außerhalb des Erfassungsbereichs (300) bereitgestellt ist;
der Störungslichtverarbeitungsabschnitt innerhalb des Erfassungsraums (300) bereitgestellt ist;
der Umgebungslichtverarbeitungsabschnitt ein Labyrinthabschnitt (15) ist, der so konfiguriert ist, dass er verhindert, dass Umgebungslicht in den Erfassungsraum (300) eindringt, und eine Flüssigkeit, die das Erfassungsziel enthält, in den Erfassungsraum (300) einleitet, wobei der Labyrinthabschnitt (15) eine Vielzahl von Trennwänden (151) einschließt,
die Erfassungsraumabdeckung den Erfassungsraum (300), das optische Element auf der lichtemittierenden Seite (712) und das optische Element auf der lichtempfangenden Seite (712) zusammen mit dem Rauchmeldersockel (5) abdeckt und die Innenseite und die Außenseite des Erfassungsbereichs (300) unterteilt,
die Erfassungsraumabdeckung eine Öffnung (31) einschließt, durch die der Wärmeluftstrom in den Erfassungsraum (300) hineinströmen kann und aus der der Wärmeluftstrom aus dem Inneren des Erfassungsraums (300) herausströmen kann, wobei die Öffnung (31) eine kreisförmige Öffnung ist und im Wesentlichen den gleichen Durchmesser wie den der ersten Öffnung (21) der inneren Abdeckung (2) aufweist,
der Störlichtverarbeitungsabschnitt einstückig mit der Erfassungsraumabdeckung (3) gebildet ist,
die äußere Abdeckung (1) die innere Abdeckung (2) und die Erfassungsraumabdeckung (3) von der Vorderseite her abdeckt, einen Teil einer äußeren Form der Brandmeldeeinrichtung bildet und einen Hauptkörper (11), einen oberen Plattenabschnitt (12), einen Verbindungsabschnitt (13), eine Öffnung (14) und einen Labyrinthabschnitt (15) aufweist, die einstückig mit der äußeren Abdeckung (1) geformt sind,
die innere Abdeckung die Erfassungsraumabdeckung (3) abdeckt und aufnimmt, in der Vorderansicht eine kreisförmige Form aufweist, und eine erste Öffnung (21), eine zweite Öffnung (22) und einen Vorsprung (23) aufweist,
die erste Öffnung (21) der inneren Abdeckung (2) eine Öffnung ist, durch die der Wärmeluftstrom in den Erfassungsraum (300) hineinströmen kann und aus der der Wärmeluftstrom aus dem Inneren des Erfassungsraums (300) herausströmen kann, wobei die Insektenschutzgitter (61) an der Öffnung bereitgestellt ist, wobei die erste Öffnung (21) eine kreisförmige Öffnung ist, die in einer Vorderansicht in der Mitte der inneren Abdeckung (2) bereitgestellt ist,
die zweite Öffnung (22) der inneren Abdeckung (2) eine Öffnung ist, durch die das Wärmeerfassungselement (700) eingeführt wird und darin angeordnet ist, wobei die zweite Öffnung (22) in der Vorderansicht eine rechteckige Öffnung ist, die eine elliptische Form aufweist und auf beiden Seiten des Vorsprungs (23) auf der Hauptachse des Vorsprungs (23) bereitgestellt ist,
der Vorsprung (23) der inneren Abdeckung (2) ein Abschnitt der inneren Abdeckung (2) ist, der vom Basisabschnitt (200) zur Vorderseite hin vorsteht, wobei der Vorsprung (23) mit dem Labyrinthabschnitt (15) der äußeren Abdeckung (1) in Kontakt kommt,
das Insektenschutzgitter (61) kreisförmig ist und in der ersten Öffnung (21) der inneren Abdeckung (2) bereitgestellt ist, wobei das Insektenschutzgitter (61) an der Branderfassungseinrichtung befestigt wird, indem das an der Öffnung der inneren Abdeckung (2) bereitgestellte Insektenschutzgitter (61) von einigen der Trennwände (151) des Labyrinthabschnitts (15) gedrückt wird, wobei einige der Trennwände (151) einen kreuzförmigen Schnittpunkt in der Mitte der äußeren Abdeckung (1) bilden.

## Revendications

1. Appareil de détection d'incendie pour détecter un incendie dans une zone de surveillance, l'appareil de détection d'incendie comprenant :
un espace de détection (300) dans lequel une cible de détection causée par le feu circule ;
un couvercle d'espace de détection configuré pour couvrir l'espace de détection (300) ;
une base de détecteur de fumée (5) ;
un couvercle extérieur (1) configuré pour couvrir le couvercle d'espace de détection ;
un couvercle intérieur (2) configuré pour couvrir le couvercle d'espace de détection ;
une portion émettrice de lumière (71) configurée pour émettre de la lumière d'émission pour détecter la cible de détection dans l'espace de détection (300) ;
une portion de réception de lumière (72) configurée pour recevoir de la lumière diffusée générée par la lumière d'émission diffusée par la cible de détection à l'intérieur de l'espace de détection (300) ;
un élément de détection de chaleur (700) ;
une portion de traitement de lumière ambiante configurée pour empêcher la lumière ambiante d'entrer dans l'espace de détection (300) ;
une portion de traitement de lumière parasite configurée pour traiter de la lumière parasite autre que la lumière diffusée, la lumière parasite étant générée à l'intérieur de l'espace de détection (300) en raison de la lumière d'émission ; et
une moustiquaire (61) configurée pour empêcher des insectes d'entrer dans l'espace de détection (300) tout en permettant à du courant d'air chaud de circuler dans ou hors de l'espace de détection (300), dans lequel
la portion de traitement de lumière ambiante et la portion de traitement de lumière parasite sont des éléments différents l'un de l'autre ;
la portion de traitement de lumière ambiante est fournie à l'extérieur de l'espace de détection (300) ;
la portion de traitement de lumière parasite est fournie à l'intérieur de l'espace de détection (300) ;
la portion de traitement de lumière ambiante est une portion de labyrinthe (15) configurée pour empêcher de la lumière ambiante d'entrer dans l'espace de détection (300) et introduire un fluide contenant la cible de détection dans l'espace de détection (300), la portion de labyrinthe (15) incluant une pluralité de parois de partitionnement (151),
le couvercle d'espace de détection couvre l'espace de détection (300), l'élément optique côté émission de lumière (712) et l'élément optique côté réception de lumière (712) conjointement avec la base de détecteur de fumée (5) et partitionne l'intérieur et l'extérieur de l'espace de détection (300),
le couvercle d'espace de détection inclut une ouverture (31) pour permettre au courant d'air chaud d'entrer dans l'espace de détection (300) et pour permettre au courant d'air chaud de sortir de l'intérieur de l'espace de détection (300), l'ouverture (31) étant une ouverture circulaire et présentant sensiblement le même diamètre que celui de la première ouverture (21) du couvercle intérieur (2),
la portion de traitement de lumière perturbatrice est formée d'un seul tenant avec le couvercle d'espace de détection (3),
le couvercle extérieur (1) couvre le couvercle intérieur (2) et le couvercle d'espace de détection (3) du côté avant, forme une partie d'une forme extérieure de l'appareil de détection d'incendie et présente un corps principal (11), une portion de plaque supérieure (12), une portion de connexion (13), une ouverture (14) et une portion de labyrinthe (15) formées d'un seul tenant avec le couvercle extérieur (1),
le couvercle intérieur couvre et abrite le couvercle d'espace de détection (3), présente une forme circulaire dans une vue avant et présente une première ouverture (21), une seconde ouverture (22) et une protubérance (23),
la première ouverture (21) du couvercle intérieur (2) est une ouverture pour permettre au courant d'air chaud d'entrer dans l'espace de détection (300) et permettre au courant d'air chaud de sortir de l'intérieur de l'espace de détection (300), la moustiquaire (61) étant fournie pour l'ouverture, la première ouverture (21) étant une ouverture circulaire fournie au centre du couvercle intérieur (2) dans une vue avant,
la deuxième ouverture (22) du couvercle intérieur (2) est une ouverture à travers laquelle l'élément de détection de chaleur (700) est inséré et disposé, la seconde ouverture (22) étant une ouverture rectangulaire présentant une forme elliptique dans une vue avant et fournie de chacun des deux côtés de la protubérance (23) sur l'axe majeur de la protubérance (23),
la protubérance (23) du couvercle intérieur (2) est une portion du couvercle intérieur (2) qui fait saillie de la portion de base (200) vers le côté avant, la protubérance (23) entrant en contact avec la portion de labyrinthe (15) du couvercle extérieur (1),
la moustiquaire (61) est circulaire et fournie dans la première ouverture (21) du couvercle intérieur (2), la moustiquaire (61) étant fixée à l'appareil de détection d'incendie par pression de la moustiquaire (61) fournie pour l'ouverture du couvercle intérieur (2) par certaines des parois de partitionnement (151) de la portion de labyrinthe (15), certaines des parois de partitionnement (151) étant une intersection de croisement au centre du couvercle extérieur (1).
